# EUROPEAN PATENT APPLICATION

(11) **EP 4 531 470 A1**
(43) Date of publication of application: **02.04.2025**
(21) Application number: 24187123.5
(22) Date of filing: 08.07.2024
(51) Int. Cl.: H04W 52/02, H04L 12/12

(54) **POWER AWARE PATH PLACEMENT FOR A NETWORK**

(30) Priority: 26.09.2023 IN 202341064503; 30.04.2024 US 202418650330
(71) Applicant: Juniper Networks, Inc., Sunnyvale, CA 94089 (US)
(72) Inventor: BARTH, Jonathan C., Sunnyvale, 94089 (US); BEERAM, Vishnu Pavan Kumar, Sunnyvale, 94089 (US); SANGLI, Srihari Ramachandra, Sunnyvale, 94089 (US); VENKATARAMAN, Sudharsana, Sunnyvale, 94089 (US)
(74) Representative: D Young & Co LLP

(57) **Abstract**

A first network device may determine a power group associating a plurality of ports of the first network device with a processing component of the first network device, and may advertise the power group to a second network device. The first network device may utilize the power group with a path placement strategy to compute a path to the second network device, and may determine a traffic load associated with the first network device. The first network device may disable the plurality of ports and the processing component based on the path and the traffic load.

## Description

### CROSS-REFERENCE TO RELATED APPLICATION

This Patent Application claims priority to India Provisional Patent Application No. 202341064503, filed on September 26, 2023, entitled "SYSTEMS AND METHODS FOR PROVIDING ENERGY EFFICIENT NETWORKS," and assigned to the assignee hereof. The disclosure of the prior Application is considered part of and is incorporated by reference into this Patent Application.

### BACKGROUND

A path may be placed across a network via two more network devices and links interconnecting the two or more network devices. A network may be designed for peak utilization, while also accounting for various types of failures. However, a network may only operate at peak utilization for very short periods of time.

### SUMMARY

Some implementations described herein relate to a method. The method may include determining, by a first network device, a power group associating a plurality of ports of the first network device with a processing component of the first network device, utilizing the power group with a path placement strategy to compute a path to a second network device. The method may include determining a traffic load associated with the first network device, and disabling the plurality of ports and the processing component based on the path and the traffic load.

Some implementations described herein relate to a first network device. The first network device may include one or more memories and one or more processors. The one or more processors may be configured to determine a power group associating a plurality of ports of the first network device with a processing component of the first network device, and advertise the power group to a second network device. The one or more processors may be configured to utilize the power group with a path placement strategy to compute a path to the second network device, and determine a traffic load associated with the first network device. The one or more processors may be configured to disable the plurality of ports and the processing component based on the path and the traffic load.

Some implementations described herein relate to a computer-readable medium that encodes a set of instructions. The set of instructions, when executed by one or more processors of a first network device, may cause the first network device to determine a power group associating a plurality of ports of the first network device with a processing component of the first network device, and utilize the power group with a path placement strategy to compute a path to a second network device, wherein the path placement strategy includes one of a most fill path placement strategy or a least fill path placement strategy. The set of instructions, when executed by one or more processors of the first network device, may cause the first network device to determine a traffic load associated with the first network device, and disable the plurality of ports and the processing component based on the path and the traffic load.

### BRIEF DESCRIPTION OF THE DRAWINGS

Figs. 1A-1I are diagrams of an example associated with providing power aware path placement for a network.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing power aware path placement for a network.

### DETAILED DESCRIPTION

The following detailed description of example implementations refers to the accompanying drawings. The same reference numbers in different drawings may identify the same or similar elements.

During non-peak times of a network, it may be beneficial to place paths through the network, such that one or more network devices may transition some unused components into a low power state or a sleep state. Path placement strategies would be required to move traffic flows away from or to specific components in order to facilitate such transitions of unused components. However, currently there is no way to place paths across a network while also accounting for power utilized used by the paths and by components of network devices providing the paths. Thus, current techniques for managing networks consume computing resources (e.g., processing resources, memory resources, communication resources, and/or the like), networking resources, and/or the like are associated with failing to place paths in a network based on power consumption of the paths, failing to place unused components of network devices into a sleep state during non-peak utilization times, unnecessarily maintaining the unused components of the network devices during non-peak utilization times of the network, and/or the like.

Some implementations described herein relate to a network device that provides power aware path placement for a network. For example, a first network device may determine a power group associating a plurality of ports of the first network device with a processing component of the first network device, and may advertise the power group to a second network device. The first network device may utilize the power group with a path placement strategy to compute a path to the second network device, and may determine a traffic load associated with the first network device. The first network device may disable the plurality of ports and the processing component based on the path and the traffic load.

In this way, the first network device provides power aware path placement for a network. For example, the first network device may determine a power group associating ports of the first network device and a processing component of the first network device, and may utilize the association of the ports to processing component for determining a path placement strategy that results in power awareness. The path placement strategy may attempt to lightly utilize many processing components or it may attempt to utilize a fewest number of processing components. Different path placement strategies may enable the first network device to make opportunistic local decisions to disable certain components. Lightly loaded processing components may facilitate powering down of one or more fabric cards on the first network device. Unused ports may allow for powering down of several components (e.g., optics, timers, processing components, and/or the like) of the first network device. Thus, the first network device conserves computing resources, networking resources, and/or the like that would otherwise have been consumed by failing to place paths in a network based on power consumption of the paths, failing to place unused components of network devices into a sleep state during non-peak utilization times, unnecessarily maintaining the unused components of the network devices during non-peak utilization times of the network, and/or the like.

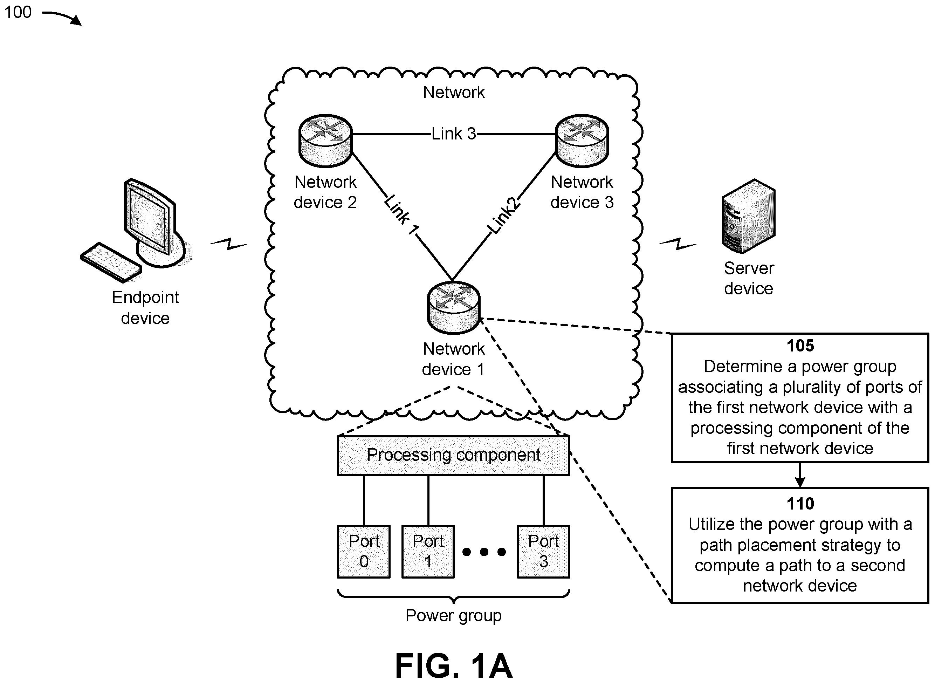

Figs. 1A-1I are diagrams of an example 100 associated with providing power aware path placement for a network. As shown in Figs. 1A-1I, the example 100 includes an endpoint device associated with a network and a server device. The network may include multiple network devices, such as a first network device (e.g., network device 1), a second network device (e.g., network device 2), and a third network device (e.g., network device 3). A first link (e.g., link 1) may be provided between the first network device and the second network device, a second link (e.g., link 2) may be provided between the first network device and the third network device, and a third link (e.g., link 3) may be provided between the second network device and the third network device. Further details of the endpoint device, the server device, the network, the network devices, and the links are provided elsewhere herein.

As shown in Fig. 1A, and by reference number 105, the first network device may determine a power group associating a plurality of ports of the first network device with a processing component of the first network device. For example, in a network device (e.g., the first network device), there may be a strong relationship between power utilization by the first network device and utilization of a processing component (e.g., a packet forwarding engine (PFE)) of the first network device. An association of ports of the first network device to the processing component of the first network device may be an attribute for determining a path placement strategy that results in power awareness. In some implementations, the first network device may determine an association of the plurality of ports of the first network device with the processing component of the first network device. The association of the plurality of ports and the processing component of the first network device may be referred to herein as a "power group."

As further shown in Fig. 1A, and by reference number 110, the first network device may utilize the power group with a path placement strategy to compute a path to a second network device. For example, the first network device may utilize the power group and one or more path placement strategies to compute paths to other network devices, such as the path to the second network device. In some implementations, the first network device may utilize a path placement strategy that attempts minimally utilize many processing components of the first network device, a path placement strategy that attempts to utilize the fewest quantity of processing components of the first network device. Different path placement strategies may enable the first network device to determine opportunistic local decisions that disable certain components of the first network device.

For example, once the power group is determined, the first network device may utilize the power group with a path placement strategy to provide minimally loaded processing components of the first network device, which may facilitate powering down of one or more fabric cards of the first network device. Such a path placement strategy may be referred to as a "least fill" path placement strategy (e.g., power group and cost-based routing) and may spread a traffic load across all possible power groups resulting in minimally utilized processing components associated with the power groups. Alternatively, the first network device may utilize the power group with a path placement strategy to provide unused ports and processing components, which may facilitate powering down of several components (e.g., optics, timers, processing components, and/or the like) of the first network device. Such a path placement strategy may be referred to as a "most fill" path placement strategy (e.g., power group only routing) and may load all power groups resulting in potentially unused power groups that may be powered off.

In some implementations, the path placement strategy may utilize an ontology graph for calculating paths for the first network device based on a hierarchy of resources. The first network device may include an additional set of sub resources (e.g., the power groups and costs associated with the power groups) with the ontology graph and/or may express the ontology graph in a hierarchical manner to pair the first network device with a set of resources associated with power consumption (e.g., the power groups).

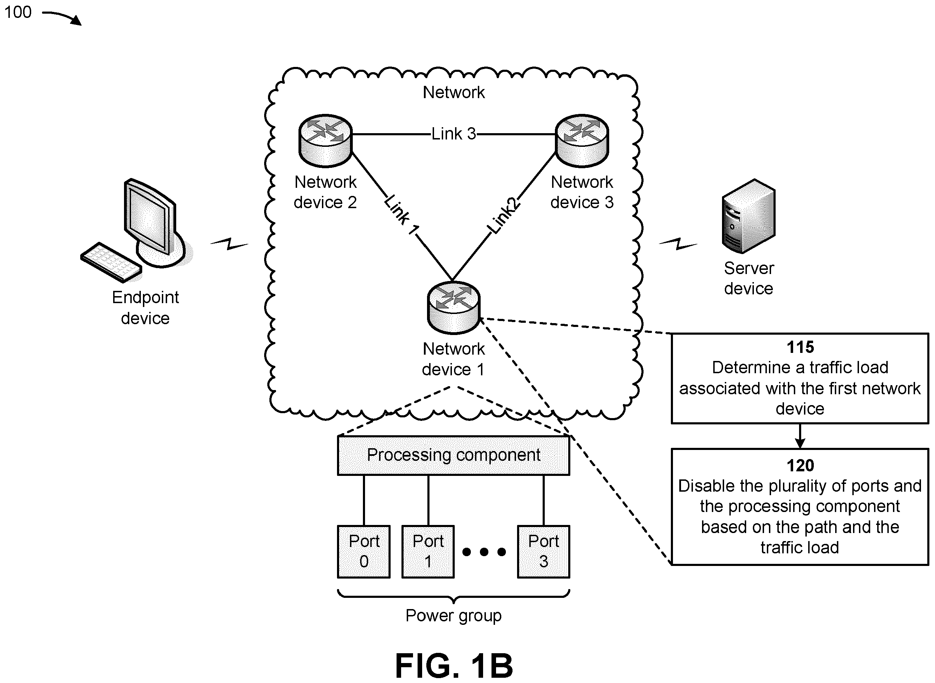

As shown in Fig. 1B, and by reference number 115, the first network device may determine a traffic load associated with the first network device. For example, the first network device may receive, from the endpoint device, first traffic destined for the server device. Alternatively, or additionally, the first network device may receive, from the server device, second traffic destined for the endpoint device. In some implementations, the first network device may determine the traffic load associated with the first network device based on the first traffic and/or the second traffic.

As further shown in Fig. 1B, and by reference number 120, the first network device may disable the plurality of ports and the processing component based on the path and the traffic load. For example, the first network device may determine that the plurality of ports and the processing component of the power group are unused based on the traffic load experienced by the first network device. Thus, the first network device may disable the plurality of ports and the processing component of the power group by powering off the plurality of ports and the processing component, resulting in power savings.

Alternatively, the first network device may determine that the plurality of ports and the processing component of the power group are being minimally used based on the traffic load experienced by the first network device. The first network device may also determine that the traffic load being processed by the plurality of ports and the processing component may be processed by other ports and another processing component of the first network device. The first network device may divert the traffic load being processed by the plurality of ports and the processing component to the other ports and the other processing component of the first network device, causing the plurality of ports and the processing component of the power group to be unused. Thus, the first network device may disable the plurality of ports and the processing component of the power group by powering off the plurality of ports and the processing component, resulting in power savings.

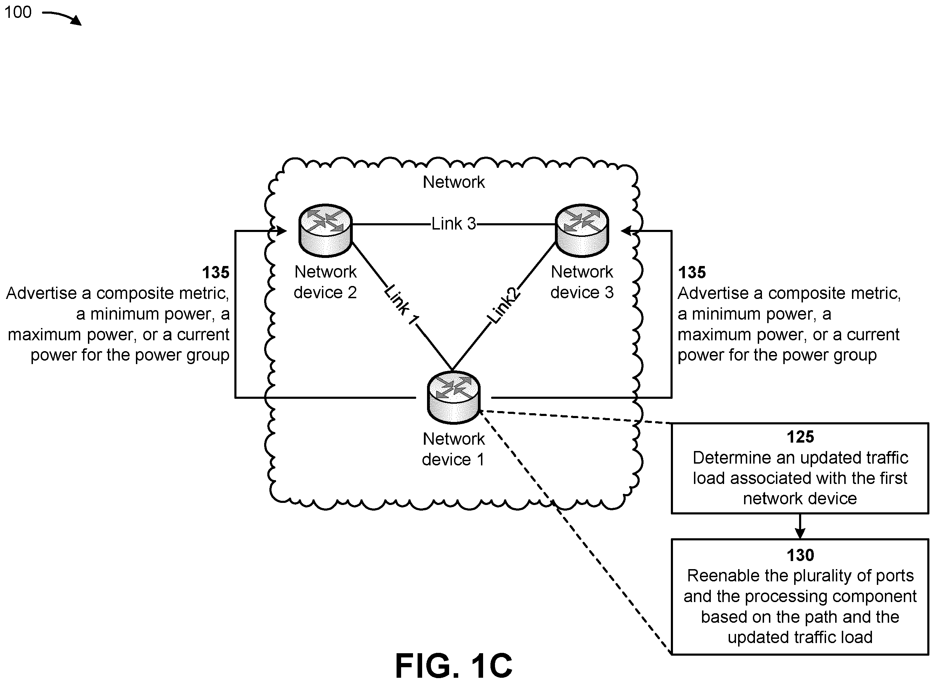

As shown in Fig. 1C, and by reference number 125, the first network device may determine an updated traffic load associated with the first network device. For example, the first network device may receive, from the endpoint device, updated first traffic destined for the server device. Alternatively, or additionally, the first network device may receive, from the server device, updated second traffic destined for the endpoint device. In some implementations, the first network device may determine the updated traffic load associated with the first network device based on the updated first traffic and/or the updated second traffic.

As further shown in Fig. 1C, and by reference number 130, the first network device may reenable the plurality of ports and the processing component based on the path and the updated traffic load. For example, the first network device may determine that the powered off plurality of ports and processing component of the power group are now required to process the updated traffic load experienced by the first network device. Thus, the first network device may reenable the plurality of ports and the processing component of the power group by powering on the plurality of ports and the processing component. The plurality of ports and the processing component of the power group may process the updated traffic load.

As further shown in Fig. 1C, and by reference number 135, the first network device may advertise a composite metric, a minimum power, a maximum power, or a current power for the power group. For example, the first network device may advertise the power group to other network device of the network, such as the second network device and the third network device. In some implementations, the first network device may advertise the power group to the other network devices via an intermediate-system-to-intermediate-system (IS-IS) link state protocol (LSP) data units. In some implementations, the first network device may determine a minimum power, a maximum power, and a current power for the power group (e.g., the plurality of ports and the processing component). For example, the minimum power for the power group may be calculated by dividing a minimum power of the processing component by a quantity of the plurality of ports, the maximum power for the power group may be calculated by dividing a maximum power of the processing component by the quantity of the plurality of ports, and the current power for the power group may be calculated by dividing a current power of the processing component by the quantity of the plurality of ports. The first network device may calculate the composite metric for the power group by subtracting the minimum power from the maximum power to generate a number, and dividing the number by the current power. In some implementations, when advertising the power group to the other network devices, the first network device may advertise one or more of the composite metric, the minimum power, the maximum power, or the current power for the power group to the other network devices.

Implementations described herein relate to power aware path placement that enables a network device to make opportunistic independent decisions to power off components based on traffic load. However, in some implementations, the network device may also determine that a port is currently unused before powering off the port, may ensure that sufficient headroom is available to absorb sudden changes in traffic load (e.g., a minimum capacity), may power on or power off components based on a minimum capacity threshold, may ensure that the network device nodes is not isolated within the network, may ensure that powering on or powering off components is sufficiently dampened (e.g., via an evaluation-interval), may utilize off-box applications to define a power policy, may coordinate powering on or powering off of adjacent ports with other network devices via a power management protocol (PMP) or extensions to existing protocols (e.g., link aggregation protocol (LACP), link layer discovery protocol (LLDP), and/or link state interior gateway protocol (IGP)), and/or the like.

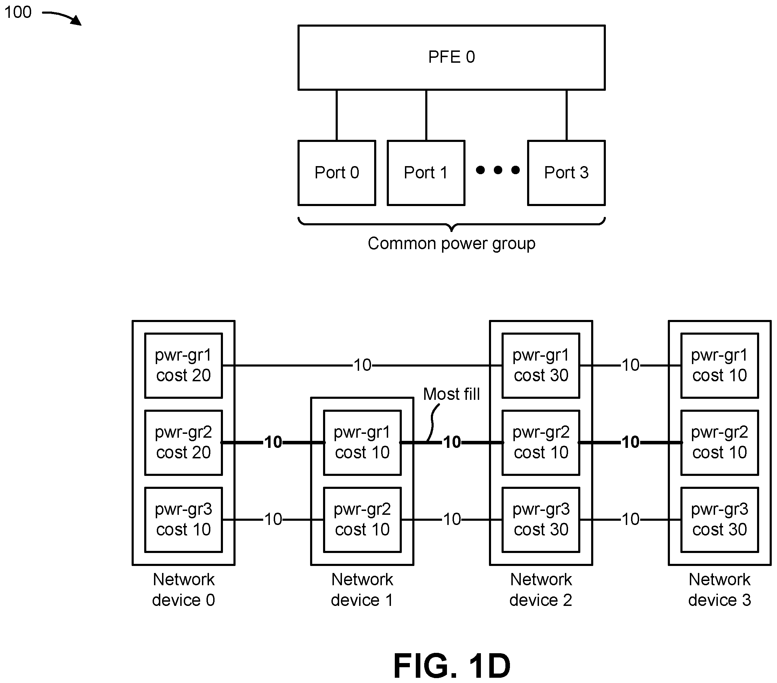

Fig. 1D depicts examples of power aware path placement of a network device. As shown at the top of Fig. 1D, traffic engineered networks often leverage various techniques for grouping traffic engineered links (e.g., a common power group for port 0 through port 3). The network device may utilize the group during path placement as inclusion or exclusion constraints (e.g., calculate a secondary path that is diverse from a primary path). The same concept can be applied by introducing a group that represents an association of a link (e.g., a port) to a processing component (e.g., a PFE), referred to herein as a power group. As shown at the bottom of Fig. 1D, when an ingress network device (e.g., network device 0) computes a path, the power group may be utilized during path placement. This may be analogous to a routing by PFE methodology where the power group is considered along with any other traffic engineering attributes. The power group methodology may follow a most filled or a least filled placement model. The most filled model generates results (e.g., a path labeled "most fill") associated with using a least number of PFEs (e.g., power group and cost based routing) and at a least cost. The least filled model generates results associated with spreading traffic engineered tunnels across the greatest number of PFEs (e.g., power group only routing) and at a least cost. This may enable network devices to make independent decisions to disable fabric cards or PFEs based on load.

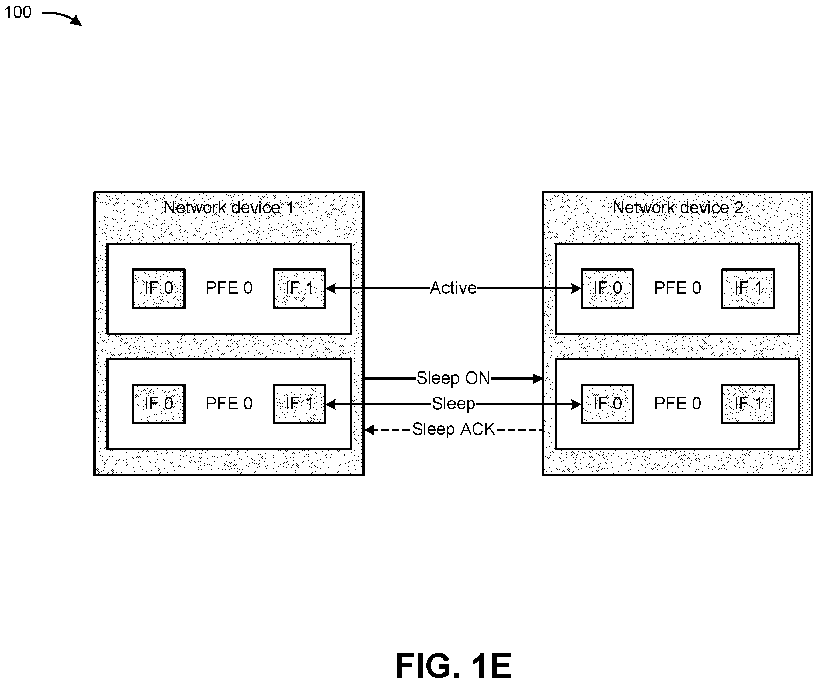

Fig. 1E depicts example sleep capability and flags associated with the first network device and the second network device. As shown, when an interface of the first network device is powered down, the first network device may signal to the second network device that the first network device is going into the sleep state. A bi-directional agreement of the sleep state may be reached between the first and second network devices. It is not mandatory that the second network device also powers down, but the link between the first network device and the second network device may be flooded with a sleep flag set. Adjacency can be remembered for the duration of the sleep by the first network device and the second network device. A link prefix may be maintained in a link state database (LSDB) of the second network device, with an associated sleep flag set. Links with the sleep flag set may be pruned for all shortest path trees (SPTs), and traffic engineered tunnels may move away from sleeping interfaces.

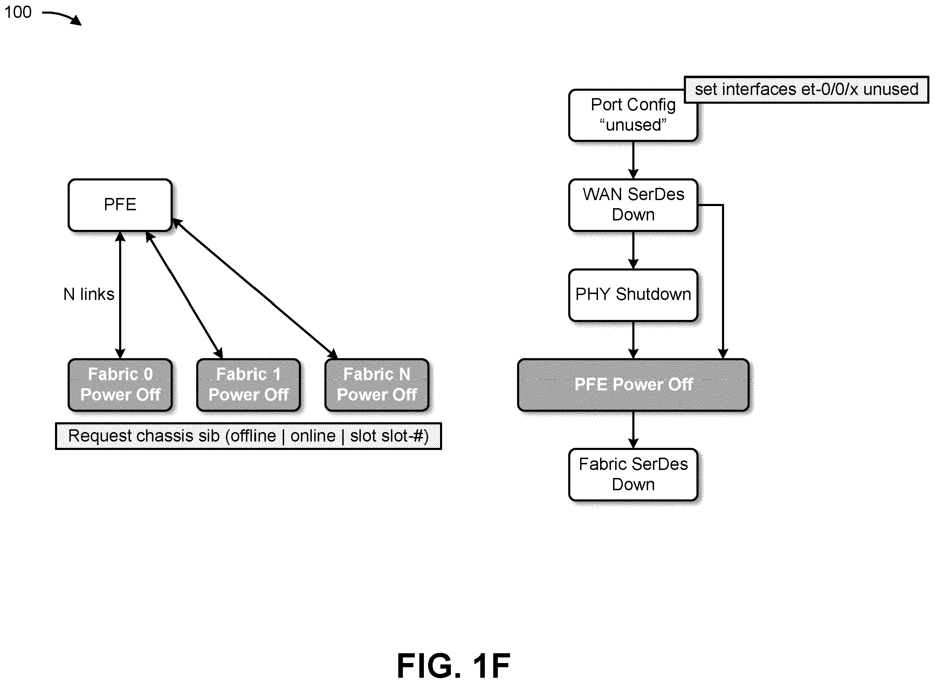

Fig. 1F depicts an example of powering off a component of a network device. As shown in the right side of Fig. 1F, the network device may determine that a port associated with a PFE is unused, and may power down a wide area network (WAN) serializer/deserializer (SerDes) and a physical layer (PHY) device associated with the PFE. Once the WAN SerDes and the PHY device are powered down, the PFE may be powered down, which may power down fabrics (e.g., Fabric 0 through Fabric N, as shown in the left side of Fig. 1F) and links associated with the powered down PFE.

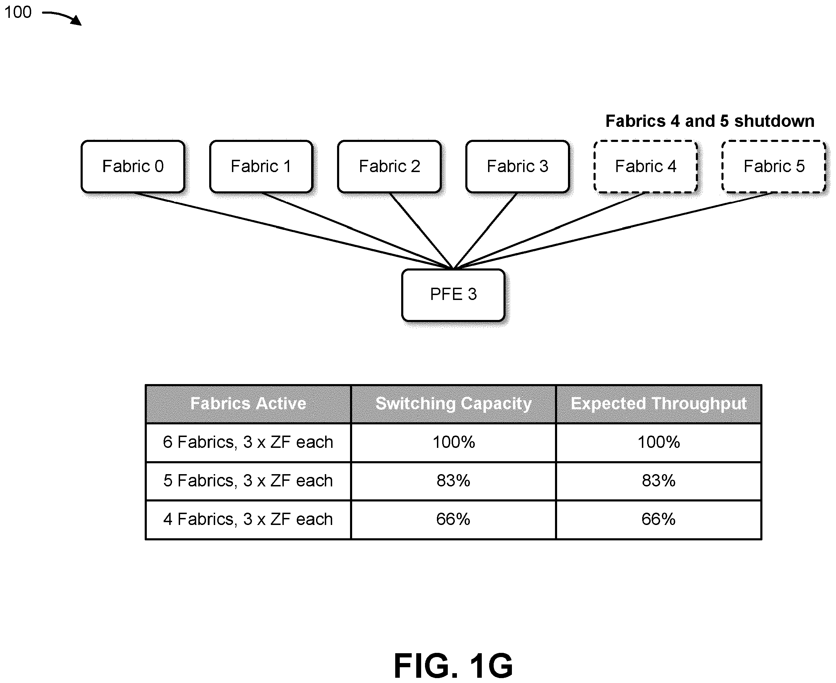

Fig. 1G depicts another example of powering off a component of a network device. As shown, a PFE (e.g., PFE3) of a network device may be associated with fabrics (e.g., Fabric 0 through Fabric 5). There is a strong relationship between a load on the PFE and the ability to disable components of the network device. For example, a lightly loaded PFE may require fewer active fabrics, with remaining fabrics being powered off, and an unused PFE may be disabled. As shown in Fig. 1G, if a switching capacity of the PFE is at 66%, the PFE may need four fabrics and the network device may power down Fabric 4 and Fabric 5.

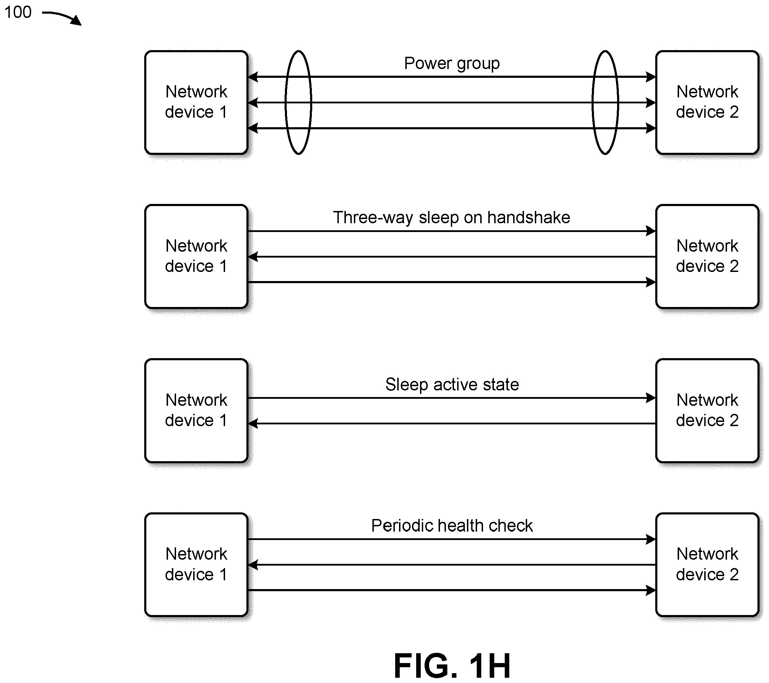

Fig. 1H depicts an example of coordinated power on and off between network devices (e.g., the first network device and the second network device). A power management protocol may be utilized by the network devices. When powering down a component of a network device, the power management protocol may require coordination between neighboring network devices. The power management protocol may gracefully move a data plane associated with the network devices, and may require LACP and/or LLDP extensions to be utilized for a network device to host applications. As further shown in Fig. 1H, a power group may be established between the network devices. The power group may include a set of links with a common PFE, a control channel for coordinating power on or off of child links, and periodic exchange of the state of all links in the power group. As further shown in Fig. 1H, the network devices may utilize a three-way handshake for power on/off states to ensure reliability and mutual agreement of transitions between sleep states. As further shown, one of the network devices may perform a periodic health check of the link to ensure that the link maintains the sleep state (e.g., that the sleep active state has not failed).

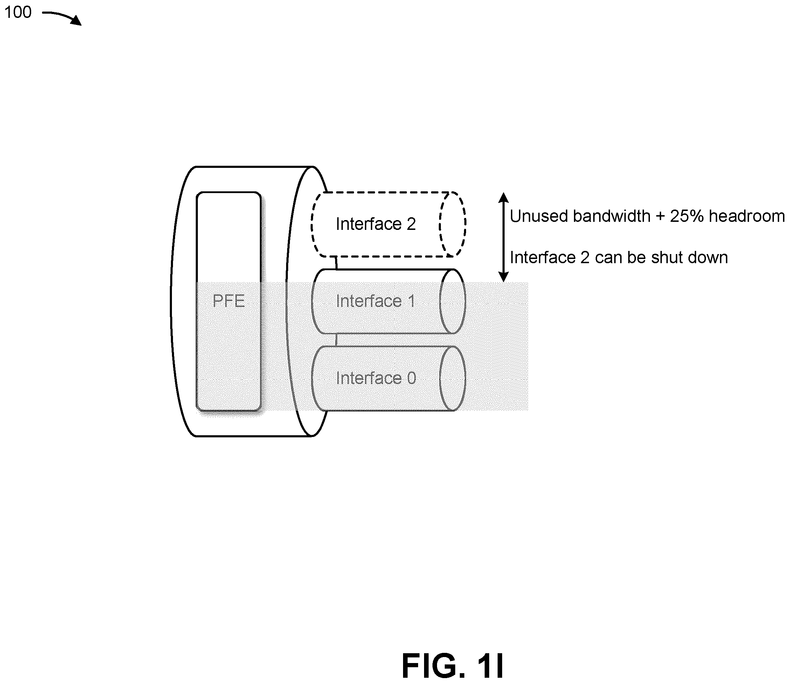

Fig. 1I depicts another example of coordinated power on and off between network devices (e.g., the first network device and the second network device). As shown, a power group may include a PFE associated with three interfaces (e.g., interface 0, interface 1, and interface 2). The PFE and the interfaces may be provided in a network device. The network device may utilize a local policy to power up or down components within the power group, may utilize time-of-day activation constraints for powering up or down components, may utilize a minimum capacity threshold (e.g., below which components of the power group may be evaluated for power up/down), may utilize an evaluation interval during which power group utilization is evaluated, and/or the like. As further shown in Fig. 1I, when bandwidth encompasses only interface 0 and interface 1, the network device may power down interface 2 due to the unused bandwidth.

In this way, the first network device provides power aware path placement for a network. For example, the first network device may determine a power group associating ports of the first network device and a processing component of the first network device, and may utilize the association of the ports to processing component for determining a path placement strategy that results in power awareness. The path placement strategy may attempt to lightly utilize many processing components or it may attempt to utilize a fewest number of processing components. Different path placement strategies may enable the first network device to make opportunistic local decisions to disable certain components. Lightly loaded processing components may facilitate powering down of one or more fabric cards on the first network device. Unused ports may allow for powering down of several components (e.g., optics, timers, processing components, and/or the like) of the first network device. Thus, the first network device conserves computing resources, networking resources, and/or the like that would otherwise have been consumed by failing to place paths in a network based on power consumption of the paths, failing to place unused components of network devices into a sleep state during non-peak utilization times, unnecessarily maintaining the unused components of the network devices during non-peak utilization times of the network, and/or the like.

As indicated above, Figs. 1A-1I are provided as an example. Other examples may differ from what is described with regard to Figs. 1A-1I. The number and arrangement of devices shown in Figs. 1A-1I are provided as an example. In practice, there may be additional devices, fewer devices, different devices, or differently arranged devices than those shown in Figs. 1A-1I. Furthermore, two or more devices shown in Figs. 1A-1I may be implemented within a single device, or a single device shown in Figs. 1A-1I may be implemented as multiple, distributed devices. Additionally, or alternatively, a set of devices (e.g., one or more devices) shown in Figs. 1A-1I may perform one or more functions described as being performed by another set of devices shown in Figs. 1A-1I.

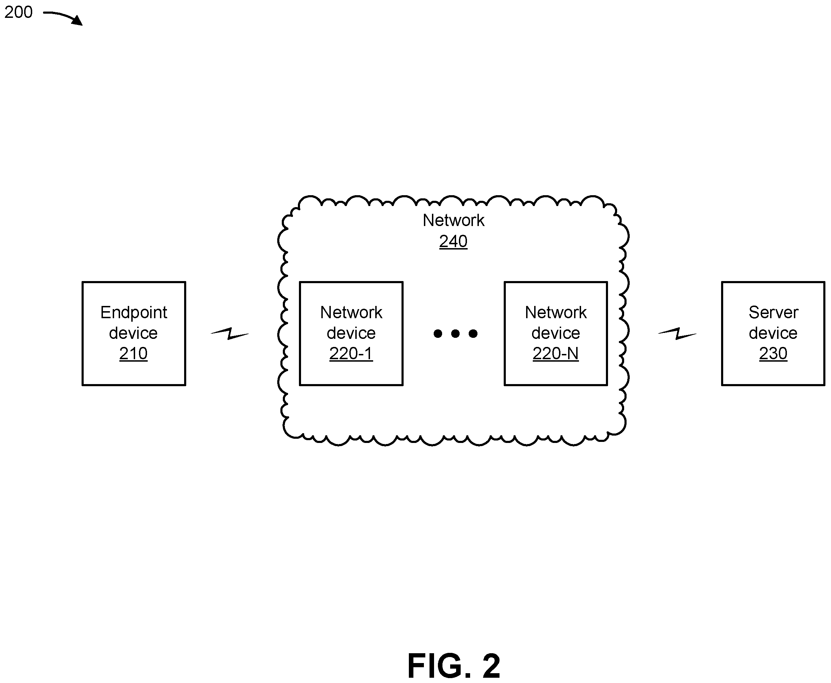

Fig. 2 is a diagram of an example environment 200 in which systems and/or methods described herein may be implemented. As shown in Fig. 2, environment 200 may include an endpoint device 210, a group of network devices 220 (shown as network device 220-1 through network device 220-N), a server device 230, and a network 240. Devices of the environment 200 may interconnect via wired connections, wireless connections, or a combination of wired and wireless connections.

The endpoint device 210 includes one or more devices capable of receiving, generating, storing, processing, and/or providing information, such as information described herein. For example, the endpoint device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, a server device, a group of server devices, or a similar type of device. In some implementations, the endpoint device 210 may receive network traffic from and/or may provide network traffic to other endpoint devices 210 and/or the server device 230, via the network 240 (e.g., by routing packets using the network devices 220 as intermediaries).

The network device 220 includes one or more devices capable of receiving, processing, storing, routing, and/or providing traffic (e.g., a packet or other information or metadata) in a manner described herein. For example, the network device 220 may include a router, such as a label switching router (LSR), a label edge router (LER), an ingress router, an egress router, a provider router (e.g., a provider edge router or a provider core router), a virtual router, a route reflector, an area border router, or another type of router. Additionally, or alternatively, the network device 220 may include a gateway, a switch, a firewall, a hub, a bridge, a reverse proxy, a server (e.g., a proxy server, a cloud server, or a data center server), a load balancer, and/or a similar device. In some implementations, the network device 220 may be a physical device implemented within a housing, such as a chassis. In some implementations, the network device 220 may be a virtual device implemented by one or more computer devices of a cloud computing environment or a data center. In some implementations, a group of network devices 220 may be a group of data center nodes that are used to route traffic flow through the network 240.

The server device 230 may include one or more devices capable of receiving, generating, storing, processing, providing, and/or routing information, as described elsewhere herein. The server device 230 may include a communication device and/or a computing device. For example, the server device 230 may include a server, such as an application server, a client server, a web server, a database server, a host server, a proxy server, a virtual server (e.g., executing on computing hardware), or a server in a cloud computing system. In some implementations, the server device 230 may include computing hardware used in a cloud computing environment.

The network 240 includes one or more wired and/or wireless networks. For example, the network 240 may include a packet switched network, a cellular network (e.g., a fifth generation (5G) network, a fourth generation (4G) network, such as a long-term evolution (LTE) network, a third generation (3G) network, and/or a code division multiple access (CDMA) network), a public land mobile network (PLMN), a local area network (LAN), a WAN, a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

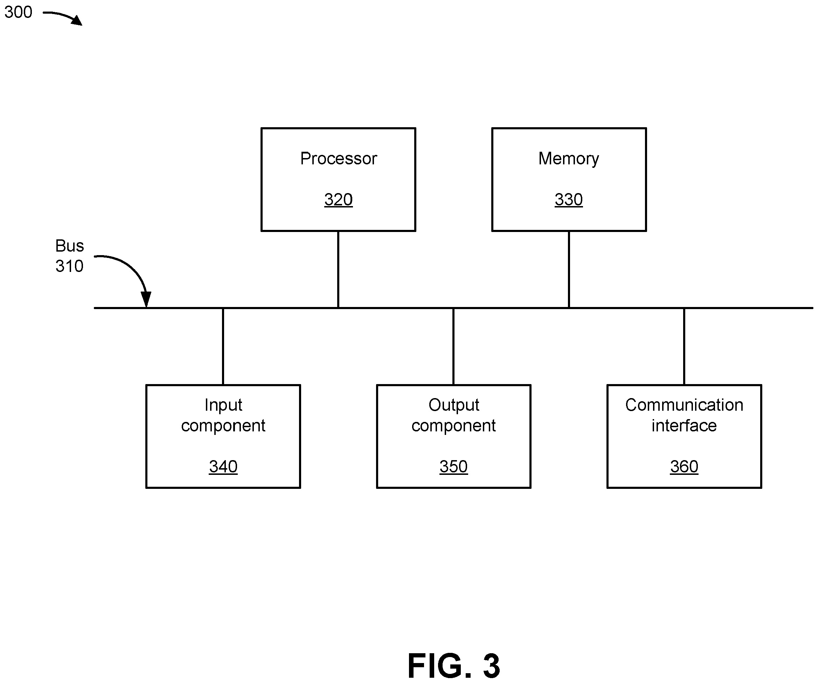

Fig. 3 is a diagram of example components of one or more devices of Fig. 2. The example components may be included in a device 300, which may correspond to the endpoint device 210, the network device 220, and/or the server device 230. In some implementations, the endpoint device 210, the network device 220, and/or the server device 230 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), an accelerated processing unit (APU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a computer-readable medium (e.g., the memory 330) may encode a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

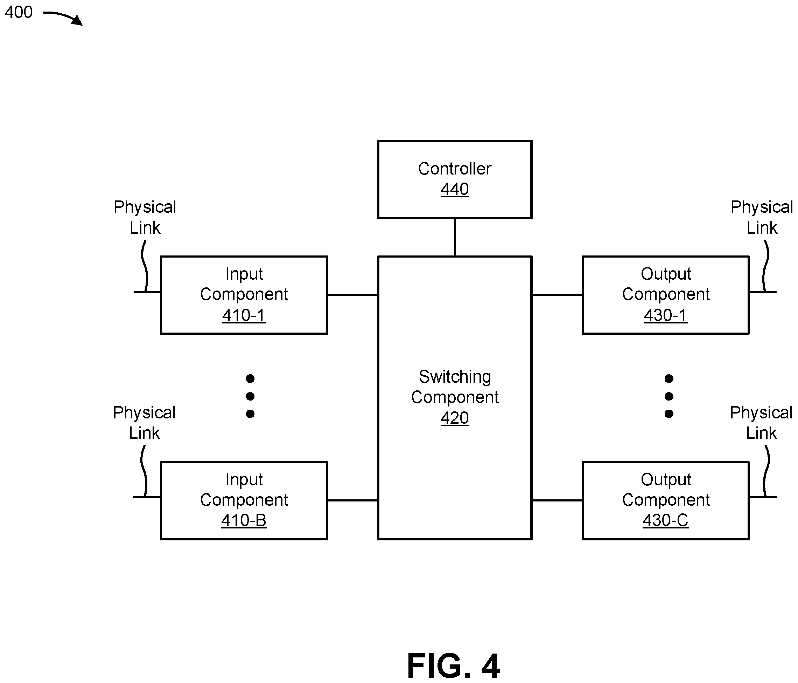

Fig. 4 is a diagram of example components of one or more devices of Fig. 2. The example components may be included in a device 400. The device 400 may correspond to the network device 220. In some implementations, the network device 220 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions encoded by a computer-readable medium. A computer-readable medium can include a non-transitory memory device. A memory device includes memory space within a single physical storage device or memory space spread across multiple physical storage devices. Additionally, or alternatively, a computer-readable medium can include transient media such as carrier waves and transmission media.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

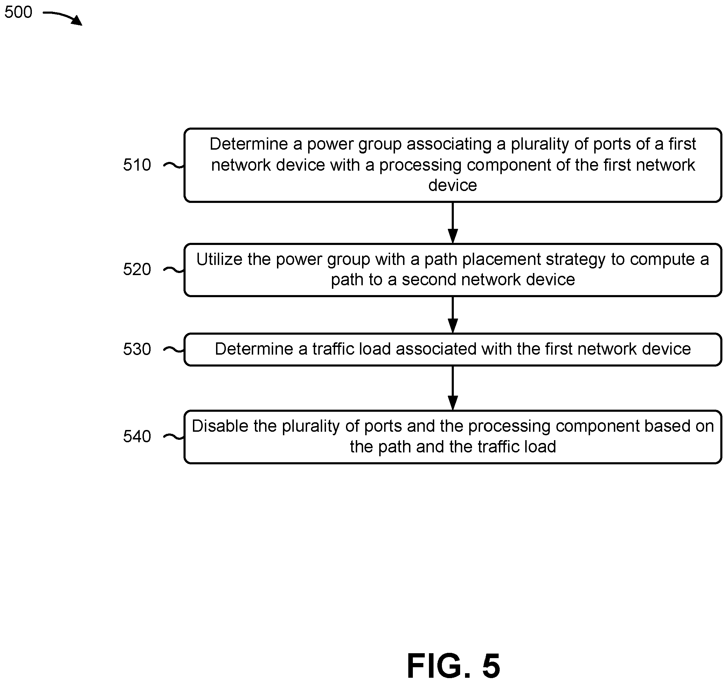

Fig. 5 is a flowchart of an example process 500 for providing power aware path placement for a network. In some implementations, one or more process blocks of Fig. 5 may be performed by a network device (e.g., a first network device 220). In some implementations, one or more process blocks of Fig. 5 may be performed by another device or a group of devices separate from or including the network device, such as an endpoint device (e.g., the endpoint device 210), a server device (e.g., the server device 230), and/or another network device (e.g., the network device 220). Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include determining a power group associating a plurality of ports of the first network device with a processing component of the first network device (block 510). For example, the first network device may determine a power group associating a plurality of ports of the first network device with a processing component of the first network device, as described above.

As further shown in Fig. 5, process 500 may include utilizing the power group with a path placement strategy to compute a path to a second network device (block 520). For example, the first network device may utilize the power group with a path placement strategy to compute a path to a second network device, as described above. In some implementations, the path placement strategy includes one of a most fill path placement strategy or a least fill path placement strategy.

As further shown in Fig. 5, process 500 may include determining a traffic load associated with the first network device (block 530). For example, the first network device may determine a traffic load associated with the first network device, as described above.

As further shown in Fig. 5, process 500 may include disabling the plurality of ports and the processing component based on the path and the traffic load (block 540). For example, the first network device may disable the plurality of ports and the processing component based on the path and the traffic load, as described above.

In some implementations, process 500 includes advertising the power group to the second network device. In some implementations, advertising the power group to the second network device causes the second network device to disable a plurality of ports of the second network device and a processing component of the second network device. In some implementations, advertising the power group includes advertising one or more of a composite metric, a minimum power, a maximum power, or a current power for the power group to the second network device. In some implementations, the composite metric for the power group is based on the minimum power, the maximum power, and the current power for the power group.

In some implementations, process 500 includes determining an updated traffic load associated with the first network device, and reenabling the plurality of ports and the processing component based on the path and the updated traffic load. In some implementations, process 500 includes advertising the power group to one or more other network devices. In some implementations, advertising the power group to the one or more other network devices includes utilizing a power management protocol to advertise the power group to the one or more other network devices. In some implementations, advertising the power group to the one or more other network devices includes utilizing an extension to a protocol to advertise the power group to the one or more other network devices.

In some implementations, process 500 includes evaluating utilization of the power group during a time period. In some implementations, process 500 includes determining another power group associating another plurality of ports of the first network device with another processing component of the first network device, determining that the other plurality of ports are unused, and disabling the other plurality of ports and the other processing component based on determining that the other plurality of ports are unused. In some implementations, disabling the other plurality of ports and the other processing component includes determining that a minimum capacity threshold is satisfied for the first network device, and disabling the other plurality of ports and the other processing component based on determining that the minimum capacity threshold is satisfied.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

Thus, from one perspective, there has now been described a first network device which may determine a power group associating a plurality of ports of the first network device with a processing component of the first network device, and may advertise the power group to a second network device. The first network device may utilize the power group with a path placement strategy to compute a path to the second network device, and may determine a traffic load associated with the first network device. The first network device may disable the plurality of ports and the processing component based on the path and the traffic load.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Further examples of feature combinations taught by the present disclosure are set out in the following numbered clauses:
1. A method, comprising:
   determining, by a first network device, a power group associating a plurality of ports of the first network device with a processing component of the first network device;
   utilizing, by the first network device, the power group with a path placement strategy to compute a path to a second network device;
   determining, by the first network device, a traffic load associated with the first network device; and
   disabling, by the first network device, the plurality of ports and the processing component based on the path and the traffic load.
2. The method of clause 1, further comprising:
   advertising the power group to the second network device.
3. The method of clause 2, wherein advertising the power group to the second network device causes the second network device to disable a plurality of ports of the second network device and a processing component of the second network device.
4. The method of clause 2 or clause 3, wherein advertising the power group comprises:
   advertising one or more of a composite metric, a minimum power, a maximum power, or a current power for the power group to the second network device.
5. The method of clause 4, wherein the composite metric for the power group is based on the minimum power, the maximum power, and the current power for the power group.
6. The method of any preceding clause, further comprising:
   determining an updated traffic load associated with the first network device; and
   reenabling the plurality of ports and the processing component based on the path and the updated traffic load.
7. The method of any preceding clause, wherein the path placement strategy includes one of a most fill path placement strategy or a least fill path placement strategy.
8. A first network device, comprising:
   one or more memories; and
   one or more processors to:
      determine a power group associating a plurality of ports of the first network device with a processing component of the first network device;
      advertise the power group to a second network device;
      utilize the power group with a path placement strategy to compute a path to the second network device;
      determine a traffic load associated with the first network device; and
      disable the plurality of ports and the processing component based on the path and the traffic load.
9. The first network device of clause 8, wherein the one or more processors are further to:
   advertise the power group to one or more other network devices.
10. The first network device of clause 9, wherein the one or more processors, to advertise the power group to the one or more other network devices, are to:
   utilize a power management protocol to advertise the power group to the one or more other network devices.
11. The first network device of clause 9 or clause 10, wherein the one or more processors, to advertise the power group to the one or more other network devices, are to:
   utilize an extension to a protocol to advertise the power group to the one or more other network devices.
12. The first network device of any of clauses 8 to 11, wherein the one or more processors are further to:
   evaluate utilization of the power group during a time period.
13. The first network device of any of clauses 8 to 12, wherein the one or more processors are further to:
   determine another power group associating another plurality of ports of the first network device with another processing component of the first network device;
   determine that the other plurality of ports are unused; and
   disable the other plurality of ports and the other processing component based on determining that the other plurality of ports are unused.
14. The first network device of clause 13, wherein the one or more processors, to disable the other plurality of ports and the other processing component, are to:
   determine that a minimum capacity threshold is satisfied for the first network device; and
   disable the other plurality of ports and the other processing component based on determining that the minimum capacity threshold is satisfied.
15. A non-transitory computer-readable medium storing a set of instructions, the set of instructions comprising:
   one or more instructions that, when executed by one or more processors of a first network device, cause the first network device to:
   determine a power group associating a plurality of ports of the first network device with a processing component of the first network device;
   utilize the power group with a path placement strategy to compute a path to a second network device,
      wherein the path placement strategy includes one of a most fill path placement strategy or a least fill path placement strategy;
   determine a traffic load associated with the first network device; and
   disable the plurality of ports and the processing component based on the path and the traffic load.
16. The non-transitory computer-readable medium of clause 15, wherein the one or more instructions further cause the first network device to:
   advertise one or more of a composite metric, a minimum power, a maximum power, or a current power for the power group to the second network device and other network devices.
17. The non-transitory computer-readable medium of clause 16, wherein the composite metric for the power group is based on the minimum power, the maximum power, and the current power for the power group.
18. The non-transitory computer-readable medium of any of clauses 15 to 17, wherein the one or more instructions further cause the first network device to:
   determine an updated traffic load associated with the first network device; and
   reenable the plurality of ports and the processing component based on the path and the updated traffic load.
19. The non-transitory computer-readable medium of any of clauses 15 to 18, wherein the one or more instructions further cause the first network device to:
   advertise the power group to one or more other network devices.
20. The non-transitory computer-readable medium of clause 19, wherein the one or more instructions, that cause the first network device to advertise the power group to the one or more other network devices, cause the first network device to:
   utilize a power management protocol or an extension to a protocol to advertise the power group to the one or more other network devices.

## Claims

1. A method, comprising:
determining, by a first network device, a power group associating a plurality of ports of the first network device with a processing component of the first network device;
utilizing, by the first network device, the power group with a path placement strategy to compute a path to a second network device;
determining, by the first network device, a traffic load associated with the first network device; and
disabling, by the first network device, the plurality of ports and the processing component based on the path and the traffic load.

2. The method of claim 1, further comprising:
advertising the power group to the second network device.

3. The method of claim 2, wherein advertising the power group to the second network device causes the second network device to disable a plurality of ports of the second network device and a processing component of the second network device.

4. The method of claim 2 or claim 3, wherein advertising the power group comprises:
advertising one or more of a composite metric, a minimum power, a maximum power, or a current power for the power group to the second network device.

5. The method of claim 4, wherein the composite metric for the power group is based on the minimum power, the maximum power, and the current power for the power group.

6. The method of any preceding claim, further comprising:
determining an updated traffic load associated with the first network device; and
reenabling the plurality of ports and the processing component based on the path and the updated traffic load.

7. The method of any preceding claim, wherein the path placement strategy includes one of a most fill path placement strategy or a least fill path placement strategy.

8. A first network device, comprising:
one or more memories; and
one or more processors to:
determine a power group associating a plurality of ports of the first network device with a processing component of the first network device;
advertise the power group to a second network device;
utilize the power group with a path placement strategy to compute a path to the second network device;
determine a traffic load associated with the first network device; and
disable the plurality of ports and the processing component based on the path and the traffic load.

9. The first network device of claim 8, wherein the one or more processors are further to:
advertise the power group to one or more other network devices.

10. The first network device of claim 9, wherein the one or more processors, to advertise the power group to the one or more other network devices, are to:
utilize a power management protocol to advertise the power group to the one or more other network devices.

11. The first network device of claim 9 or claim 10, wherein the one or more processors, to advertise the power group to the one or more other network devices, are to:
utilize an extension to a protocol to advertise the power group to the one or more other network devices.

12. The first network device of any of claims 8 to 11, wherein the one or more processors are further to:
evaluate utilization of the power group during a time period.

13. The first network device of any of claims 8 to 12, wherein the one or more processors are further to:
determine another power group associating another plurality of ports of the first network device with another processing component of the first network device;
determine that the other plurality of ports are unused; and
disable the other plurality of ports and the other processing component based on determining that the other plurality of ports are unused.

14. The first network device of claim 13, wherein the one or more processors, to disable the other plurality of ports and the other processing component, are to:
determine that a minimum capacity threshold is satisfied for the first network device; and
disable the other plurality of ports and the other processing component based on determining that the minimum capacity threshold is satisfied.

15. A computer-readable medium comprising instructions which, when executed by a computer, cause the computer to carry out the method of any of claims 1 to X.
